Europäisches Patentamt

European Patent Office

Office européen des brevets

(19)

(11) Numéro de publication: **0 131 131**
**B1**

(12) # FASCICULE DE BREVET EUROPEEN

(45) Date de publication du fascicule du brevet: **01.07.87**

(51) Int. Cl.⁴: **G 02 B 6/24**

(21) Numéro de dépôt: **84106103.9**

(22) Date de dépôt: **29.05.84**

(54) Ensemble de commutation optique spatiale.

(30) Priorité: **31.05.83 FR 8308970**

(43) Date de publication de la demande:
**16.01.85 Bulletin 85/03**

(45) Mention de la délivrance du brevet:
**01.07.87 Bulletin 87/27**

(84) Etats contractants désignés:
**BE DE FR GB IT LU NL SE**

(56) Documents cités:
**FR-A-2 520 179**
**GB-A-1 407 544**
**US-A-3 542 451**
**US-A-3 792 239**
**US-A-3 975 082**

**CONTROL AND INSTRUMENTATION, vol. 13, no. 3, mars 1981, pages 45-46, Londres, GB; J. BROTTON: "Remote sensing could emerge as a major role for fibre optics"**

**OPTICAL COMMUNICATION CONFERENCE, 17-19 septembre 1979, Amsterdam, NL, pages 21.5-1 - 21.5-7; G.L. TANGONAN et al.: "Planar multimode devices for fiber optics"**

(73) Titulaire: **ALCATEL CIT**
**33, rue Emeriau**
**F-75015 Paris (FR)**

(72) Inventeur: **Boirat, Robert**
**La Bruyère Roinville**
**F-91410 Dourdan (FR)**
Inventeur: **Faugeras, Philippe**
**11, rue de Sully**
**F-92100 Boulogne-Billancourt (FR)**
Inventeur: **Haux, Denis**
**10, rue de Cochereau**
**F-91150 Etampes (FR)**
Inventeur: **Mimeur, Jacques**
**Chemin des Barattes**
**F-74290 Veyrier du Lac (FR)**

(74) Mandataire: **Weinmiller, Jürgen et al**
**Lennéstrasse 9 Postfach 24**
**D-8133 Feldafing (DE)**

## Description

La présente invention est du domaine des transmissions optiques. Elle porte plus particulièrement sur un ensemble de commutation optique spatiale, qui effectue sélectivement des couplages entre accès d'un premier groupe de N premiers éléments optiques distincts et accès d'un second groupe de P seconds éléments optiques distincts. Cet ensemble de commutation permet, en particulier, d'assurer la diffusion de P programmes vers N abonnés et constitue alors un diffuseur optique de programmes.

D'une manière générale, dans un diffuseur optique de P programmes vers N abonnés, N fibres optiques sont affectées à la transmission de chacun des P programmes pour les N abonnés, les P fois N fibres résultantes sont regroupées en N groupes de P fibres, chacun affecté à l'un des abonnés, tandis que l'une convenable des P fibres de chacun des N groupes est couplée à la fibre d'abonné concernée pour la réception, par cet abonné, du programme souhaité parmi les P programmes mis à sa disposition.

Un dispositif de commutation optique peut assurer la sélection de l'un des programmes parmi les P pour chaque abonné.

Un mode de réalisation, par voie mécanique, d'un dispositif de commutation optique permettant d'obtenir le couplage souhaité par déviation d'un faisceau de lumière est décrit dans le document US—A—4 304 460. Ce dispositif comporte un moyen de collimation (ou de focalisation) constitué par une lentille et un moyen de déviation constitué par un miroir tournant.

Compte-tenu des très faibles dimensions des fibres optiques utilisées, ce dispositif de commutation et, d'une manière générale, les dispositifs de commutation opto-mécaniques à déviation de lumière sont d'encombrement important par rapport à celui des fibres et de réalisation difficile si on veut minimiser les pertes de lumière.

Un autre mode de réalisation, également par voie mécanique, d'un dispositif de commutation optique permettant d'obtenir le couplage souhaité par aiguillage d'une fibre est donné dans l'article "La commutation optique dans les réseau locaux de vidéocommunication" de L. Jeunhomme, publié dans la revue technique Thomson-CSF-vol. 14 No. 3 Septembre 1982 pages 767 à 785. Cette solution consiste à utiliser, face à chaque fibre d'abonné dont l'extrémité est équipée d'une microlentille, un barillet porte-fibres constitué par un cylindre à rainures périphériques recevant les extrémités de P fibres dites fibres de programme, également équipées de microlentilles, et à entraîner le barillet porte-fibres à l'aide d'u micromoteur afin de positionner la fibre de programme désirée face à la fibre d'abonné. Une telle réalisation, conduit, dans le contexte d'application à un diffuseur optique de programmes, tel qu'envisagé en particulier, dans lequel il y a autant de dispositifs optiques de commutation que d'abonnés, à un encombrement prohibitif vis-à-vis de celui des fibres.

La présente invention a pour but de réaliser un ensemble de commutation spatiale, en particulier pour la diffusion de programmes vers une pluralité d'abonnés, se présentant sous une forme particulièrement compacte et utilisant des éléments modulaires de structure simple.

La présente invention a donc pour objet un ensemble de commutation optique spatiale entre accès d'un premier groupe de N premiers éléments optiques distincts et un second groupe de P seconds éléments optiques distincts, caractérisé par le fait qu'il comporte:

—un ensemble dit de sélection optique constitué par un empilement de N plaquettes optiques rigides et plates interposées et maintenues fixes chacune en regard de l'accès de l'un des N premiers éléments optiques qui sont montés, au pas des plaquettes optiques dans leur empilement, en un réseau qui leur est transversal, dans lequel ensemble chaque plaquette optique comporte P guides d'ondes distincts ayant des premières extrémités couplées en commun à l'accès du premier élément optique en regard, auquel cette plaquette optique est affecteé, et des secondes extrémités alignées débouchant sur l'un des bords et chaque plaquette optique est associeé à un ruban étanche à la lumière, présentant au moins une perforation et mobile en translation devant les secondes extrémités des P guides de cet plaquette optique, et dans lequel ensemble lesdites plaquettes optiques ont toutes les secondes extrémités de leurs guides avec leurs N rubans associés d'un même côté de l'ensemble de sélection optique,

—un ensemble dit de distribution optique constitué par un empilement de P plaquettes dites de distribution optique, dans lequel les plaquettes sont montées transversalement aux plaquettes optiques de l'ensemble de sélection optique et au même pas celui entre les secondes extrémités des guides de chacune des plaquettes optiques de l'ensemble de selection optique et incorporent chacune N guides d'onde individuels ayant des premières extrémités couplées en commun à l'accès dudit second élément optique auquel la plaquette considérée est affectée, et des secondes extrémités alignées qui débouchent sur l'un des bords de la plaquette, et dans lequel les premières extrémités des guides des différentes plaquettes sont d'un même côté de l'empilement et sont couplées aux accès des seconds éléments optiques et les secondes extremités des guides des différentes plaquettes débouchent d'un même autre côté de l'empilement en étant agencées en N rangées perpendiculaire aux plans des plaquettes de l'ensemble de distribution sur chacune desquelles elles sont en regard respectivement des secondes extrémités des P guides de l'un desdites plaquettes de l'ensemble de sélection et séparées de cette plaquette optique par le ruban qui lui est associé.

L'invention sera décrite ci-après en se référant aux exemples de réalisation illustrés dans le dessin ci-annexé. Dans ce dessin:

—la figure 1 représente schématiquement un exemple de réalisation d'un dispositif opto-mécanique de commutation, mis en application dans l'invention,

—la figure 2 représente schématiquement une variante de réalisation particulièrement avantageuse de ce dispositif opto-mécanique de commutation,

—la figure 3 représente schématiquement un ensemble de commutation optique spatiale selon l'invention, notamment pour la diffusion optique de P programmes vers N abonnés, faisant application de dispositifs opto-mécaniques de commutation selon la figure 1 ou selon la figure 2,

—la figure 4 représente un mode de réalisation concrète de l'ensemble de commutation optique spatiale de la figure 3,

—la figure 5 est une vue en coupe partielle de l'ensemble de commutation, faite selon la ligne V—V de la figure 4,

—la figure 6 est une autre vue en coupe partielle de l'ensemble de commutation, faite selon la ligne VI—VI de la figure 4,

—la figure 7 schématise un agencement d'éléments de repérage de positionnement pour chaque dispositif opto-mécanique de commutation de l'ensemble de commutation selon les figures 3 à 6,

—la figure 8 représente schématiquement l'un des éléments, dit plaquette de distribution optique rentrant dans l'ensemble de commutation optique selon les figures 3 à 6.

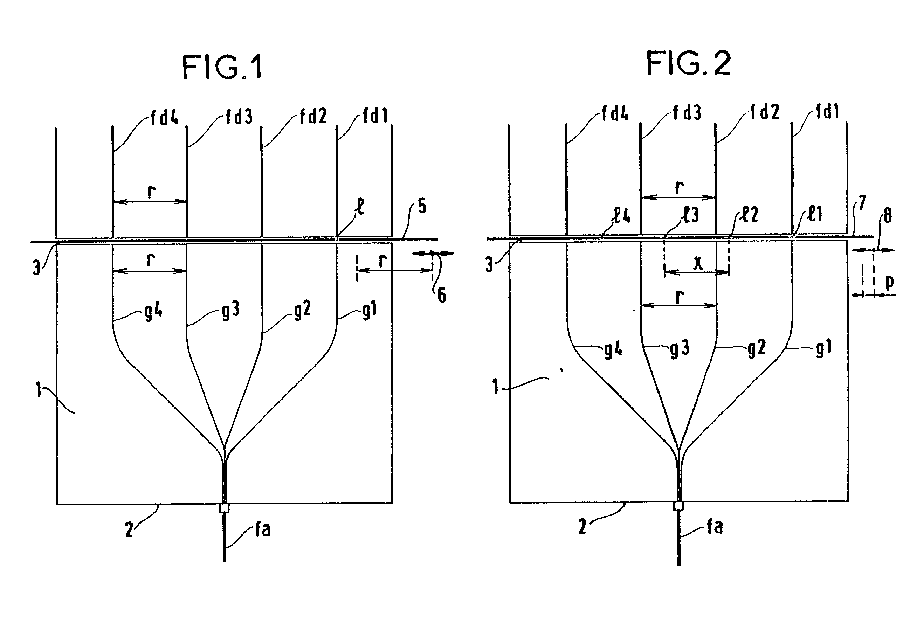

Dans la figure 1, on a illustré schématiquement un exemple de réalisation d'un dispositif de commutation opto-mécanique utilisé selon l'invention, pour le couplage sélectif entre un accès d'un premier élément optique, par exemple une fibre fa dite fibre d'abonné, et un accès d'un second élément optique parmi une pluralité de P seconds éléments optiques distincts; dans l'exemple illustré ces seconds éléments optiques sont au nombre de quatre, P=4 et également des fibres optiques dites secondes fibres optiques fd1 à fd4. Les accès concernés de ces secondes fibres optiques sont agencées à pas régulier r sur une même ligne.

Le disposipif de commutation opto-mécanique est interposé entre l'accès de la fibre fa et les accès des secondes fibres fd1 à fd4. Il comporte une plaquette optique rigide et plate 1, de forme rectangulaire, et un ruban souple étanche à la lumière 5 intercalé entre la plaquette optique 1 et les accès des fibres fd1 à fd4. La plaquette optique 1, qui constitue un collecteur, incorpore autant de guides d'onde individuels, soit quatre guides d'onde g1 à g4, qu'il y a de secondes fibres optiques fd1 à fd4. Ces guides d'onde g1 à g4 s'épanouissent depuis un premier bord 2 de la plaquette optique 1 sur laquelle ils ont des premières extrémités regroupées en commun et disposées en regard de l'accès de la fibre fa, jusqu'à un second bord 3 de l'ensemble optique 1 où ils ont des secondes extrémités alignées et s'étendant sur ce bord à pas régulier choisi égal au pas r entre les accès des secondes fibres optiques, qui sont disposés chacun en regard de l'une de ces secondes extrémités des guides.

Le ruban 5, intercalé entre ces secondes extrémités des guides g1 à g4 de la plaquette 1 et les accès des secondes fibres optiques fd1 à fd4, est déplacé en translation, ainsi que schématisé par la flèche 6 et comporte une perforation 1. Cette perforation 1 est dimensionnée et positionnée de manière à permettre pour chacune de P positions différentes du ruban 4 le couplage de la seconde extrémité de l'un des guides g de la plaquette optique avec l'accès de la seconde fibre optique fd en correspondance.

L'amplitude maximale nécessaire du déplacement du ruban devant les accès des secondes fibres optiques fd et les secondes extrémités des guides g est égale à la distance maximale entre deux accès de ces secondes fibres ou celle entre deux secondes extrémités des guides c'est-à-dire ici à (P—1) fois le pas r soit ici 3r.

De cette représentation schématique donnée dans la figure 1, on comprendra aisément que les secondes fibres optiques fd peuvent être en nombre P, différent de quatre, sur leur ligne. La plaquette optique comportera alors le même nombre P de guides d'onde.

En variante par rapport à la figure 1, les accès des secondes fibres optiques fd peuvent ne pas être à pas régulier sur leur ligne; les secondes extrémités des guides s'étendront sur le bord 3 en correspondance de position avec les différents accès des secondes fibres optiques et le ruban 5 sera entrainé en translation selon les espacements entre les accès des secondes fibres optiques.

Dans la figure 2, on a illustré schématiquement une variante de réalisation du dispositif par rapport à la figure 1. Dans cette variante, les éléments identiques à ceux de la figure 1 sont désignés sous les mêmes références, les éléments qui diffèrent sont désignés sous de nouvelles références.

Dans la figure 2, un ruban 7 est déplacé en translation devant les accès des secondes fibres optiques fd et les secondes extrémités des guides g de la plaquette 1, ainsi que symbolisé par la flèche 8. Il présente autant de perforations il à 14 qu'il y a de guides g1 à g4 ou de secondes fibres optiques fd1 à fd4. Ces perforations l1 à l4 sont chacune analogues à la perforation unique 1 précédente; elles sont alignées et disposées avec un pas régulier x entre elles, égal au pas régulier r entre les accès des secondes fibres optiques sur leur ligne diminué d'un incrément p, faible par rapport à r.

En variante, le pas entre les perforations 1l à l4 sera égal au pas r augmenté de l'incrément p, faible par rapport à r.

Dans ces conditions, le ruban 7 est entrainé par pas de valeur faible égale à la valeur de cet incrément p. Par rapport, à la réalisation selon la figure 1, cette réalisation permet, en réduisant l'amplitude du déplacement du ruban, d'obtenir un positionnement très précis du ruban et une rapidité de commutation accrue.

En variante par rapport à la figure 2, les accès des secondes fibres optiques fd seront toujours alignés mais ne seront plus à pas régulier sur leur ligne; les secondes extrémités des guides s'étendront sur le bord 3 en correspondance de position avec les différents accès des secondes fibres optiques et les perforations du ruban 7, toujours alignées, auront un espacement entre deux consécutives d'entre elles égal, à l'incrément p près, à l'espacement entre les deux accès consécutifs des secondes fibres optiques de mêmes rangs respectifs sur leur ligne.

Pour qu'un seul couplage entre l'accès de la fibre fa et l'accès de l'une des secondes fibres fd puisse être obtenu, pour chacune des P positions du ruban 7 entraîne par pas p, le pas p et l'espacement entre les accès des secondes fibres fd seront choisis par exemple de telle sorte que cet espacement soit supérieur à (P−1) fois le pas p.

Dans ces deux réalisations illustrées, la plaquette optique 1 peut être obtenue en structure intégrée en créant les guides d'onde g par diffusion d'ions dans une plaque de verre. Ce mode d'obtention est décrit, par exemple, dans l'article "Planar multimode devices for fiber optics" de G. L. Tangonan et autres présenté à Optical Communication Conférence, Amsterdam 17—19 septembre 1979, ou dans l'article "Fast fabrication method for thick and highly multimode optical waveguides" de G. H. Chartier et autres, publié dans Electronics letters vol. 13, No. 25 du 8 décembre 1977 pages 21.5—1 à 21.5—7.

Cette plaquette optique 1 peut également être obtenue par surmoulage de fibres individuelles constituant lesdits guides d'onde g dans une résine époxy chargée en silice ou par moulage de ces fibres dans du verre à point de fusion de l'ordre de 500° et à faible coefficient de dilatation minimisant les contraintes lors du refroidissement. Dans ces derniers modes d'obtention, un guide supplémentaire dit guide commun, de section plus grande que celle des guides individuels pourra être couplé directement aux premières extrémités des guides individuels g rassemblées en un réseau hexagonal et constituer une première extrémité commune de ces guides individuels g sur le bord correspondant de la plaquette 1.

Dans ces deux réalisations, indépendamment de leur mode d'obtention, les guides individuels g de la plaquette optique 1 sont choisis d'ouverture numérique faible pour minimiser les pertes au couplage réalisé. De préférence aussi, compte tenu de l'écartement, faible mais cependant non négligeable, existant entre les secondes extrémités des guides g et les accès des secondes fibres optiques fd du fait de la présence du ruban intercalaire 5 ou 7, au moins les secondes extrémités des guides et les accès des secondes fibres optiques seront individuellement équipés de microlentilles améliorant la qualité des couplages réalisés.

Outre l'avantage dû à la rigidité et à forme plate de la plaquette optique 1, le dispositif de commutation optique présente l'avantage de l'entraînement aisé du seul ruban 5 ou 7 alors que les accès des fibres fa et fd sont fixes et que la plaquette optique 1 est également fixe, ce qui permet un prépositionnement relatif très précis des extrémités des guides relativement à l'accès de la fibre fa d'une part et aux accès des fibres fd d'autre part.

Ce dispositif constitue, par ailleurs, un élément modulaire aisément reproducible et qui permet la constitution aisée d'un ensemble de sélection optique, par simple empilement d'élément modulaires, utilisable dans un ensemble de commutation optique spatiale et en particulier dans un diffuseur optique de programmes de structure finale se présentant sous forme très compacte.

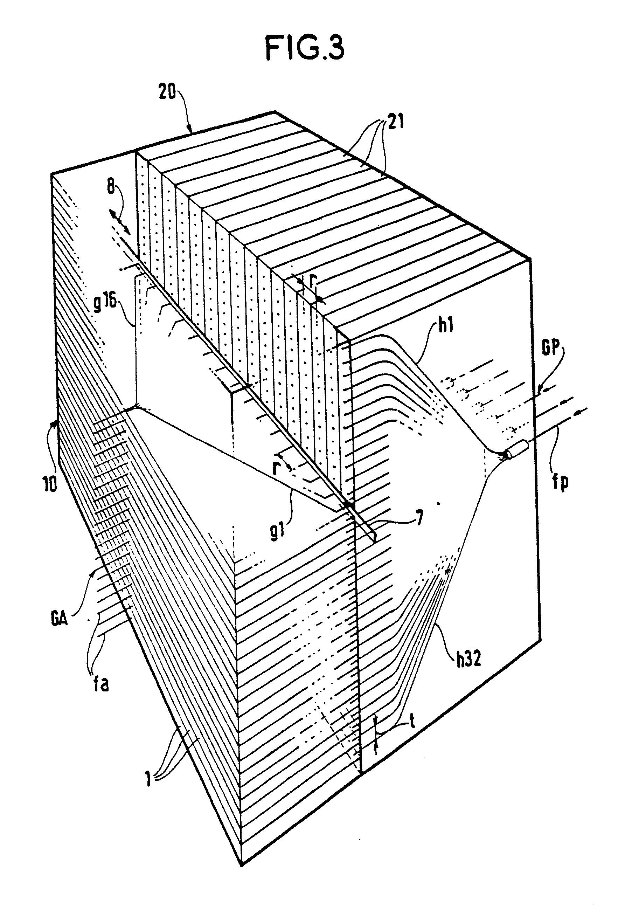

Dans la figure 3, on a illustré schématiquement un tel ensemble de commutation optique entre accès d'un premier groupe GA de N premiers éléments optiques distincts fa et accès d'un second groupe GP de P seconds éléments optiques distincts fp. Les éléments optiques fa et fp représentés sont des fibres optiques. Cet ensemble de commutation optique spatiale comporte N dispositifs de commutation opto-mécaniques, à plaquette optique fixe et ruban mobile, identiques à celui illustré dans la figure 1 ou dans la figure 2. Dans cet ensemble de commutation, les plaquettes optiques individuelles et le ruban associé à chacune d'eller sont désignés sous les références 1 et 7 adoptées dans la figure 2, les rubans étant individuellement entraînés ainsi que schématisé par la flèche 8 correspondante.

Ces N dispositifs de commutation opto-mécaniques constituent un ensemble de sélection optique 10.

L'ensemble de commutation optique spatiale illustré est décrit ci-après dans le cadre de son application à une diffusion optique de P programmes vers N abonnés, ces programmes étant transmis depuis les P fibres optiques fp dites fibres de programme tandis que les N fibres optiques fa sont les fibres d'abonnés sur chacune desquelles peut être reçu l'un des P programmes. Cet ensemble de commutation optique spatiale est appelé ci-après diffuseur optique. Da description est donnée, à titre d'exemple, en choisissant le cas où 16 programmes sont à diffuser vers 32 abonnés, P=16, N=32.

Le diffuseur optique comporte un premier empilement de 16 plaquettes de distribution optique de programme 21, identiques entre elles. Chacune de ces plaquettes 21 est destinée à assurer la distribution de l'un des 16 différents programmes vers chaque abonné. Ces 16 plaquettes de distribution optique de programme 21 constituent un ensemble de distribution optique 20.

Chacune des plaquettes 21 comporte 32 guides d'onde optiques distincts h1 à h32, dits guides de distribution de l'un des programmes. Les 32 guides de chacune des plaquettes 21 ont des premiers accès couplés en commun à l'accès de l'une des fibres de programme fp affectée à la plaquette considérée et ont des seconds accès dits accès de sortie de ce programme débouchant sur la tranche de cette plaquette, sur laquelle ils sont disposés en une ligne et à pas régulier t entre eux.

Dans l'empilement des 16 plaquettes de distribution de programme 21, les guides d'onde h1 à h32 des différentes plaquettes ont leurs accès de sortie, pour les P différents programmes, disposés d'un même côté. Ces 16 fois 32 accès de sortie résultants définissent aussi entre eux 32 rangées, chacune de 16 accès pour les 16 différents programmes, le long de chacune desquelles les 16 accès de sortie sont agencés au pas r pour constituer les 16 accès de 16 seconds éléments optiques pour l'un des dispositifs de commutation opto-mécaniques de la figure 2 (ou en variante de la figure 1). Les plaquettes 21 dans l'ensemble de distribution optique sont alors au pas r.

Les dispositifs de commutation opto-mécaniques à plaquette optique 1 et ruban 7, de l'ensemble optique de sélection, effectés chacun à l'une des fibres fa du groupe GA, sont également montés en un second empilement dans lequel les dispositifs individuels sont disposés transversalement aux plaquettes de distribution 21, soit parallèlement aux 32 rangées d'accès de sortie qu'elles définissent sur leur empilement. Dans chacun des dispositifs opto-mécaniques, la plaquette optique 1 comporte 16 guides d'onde individuels, g1 à g16. Ces 16 guides d'onde g1 à g16 ont leurs premières extrémités regroupées en commun et disposées en regard de l'une des fibres d'abonné fa. Dans l'empilement de plaquettes optique 1, les 32 premières extrémités des guides pour les 32 plaquettes optiques sont d'un même côté et disposées chacune en regard de l'une des fibres d'abonnés fa qui est affectée au dispositif de commutation opto-mécanique correspondant. Les 16 guides d'onde de chaque plaquette optique 1 ont leurs secondes extrémités alignées et au pas r sur leur ligne et disposées chacune en regard de l'un des 16 accès de sortie de programme de l'une des 32 rangées que comporte l'ensemble de distribution optique.

Le ruban 7 associé à chaque ensemble plaquette est donc intercalé entre chacune des 16 secondes extrémités des guides d'onde g1 à g16 de la plaquette optique 1 considérée et les 16 accès de sortie des 16 programmes de l'une des 32 rangées d'accès de sortie de l'ensemble de distribution optique 20. Les rubans 7 sont individuellement entraînés en translation, selon la flèche 8.

Ce diffuseur optique, dans lequel l'ensemble de distribution et l'empilement des plaquettes optiques 1 sont fixes et dans lequel les rubans sont mus individuellement, assure la diffusion sur chacune des fibres d'abonné du programme souhaité parmi les P possibles, un même programme pouvant être reçu sur plusieurs fibres d'abonné distinctes fa.

Dans l'exemple illustré dans la figure 3, les P seconds éléments optiques couplés aux guides des Pl plaquettes de distribution, respectivement, sont, ainsi qu'indiqué ci-avant, des fibres optiques. En variante, ils pourraient être des sources de lumière émettrices de programme, chaque source étant par exemple constituée d'une diode laser ou, plus avantageusement, de plusieurs diodes laser émettant le même programme, cette dernière configuration présentant notamment l'avantage, outre celui d'une plus grande fiabilité, de diminuer le bruit modal grâce à la superposition des différents modes des diodes laser.

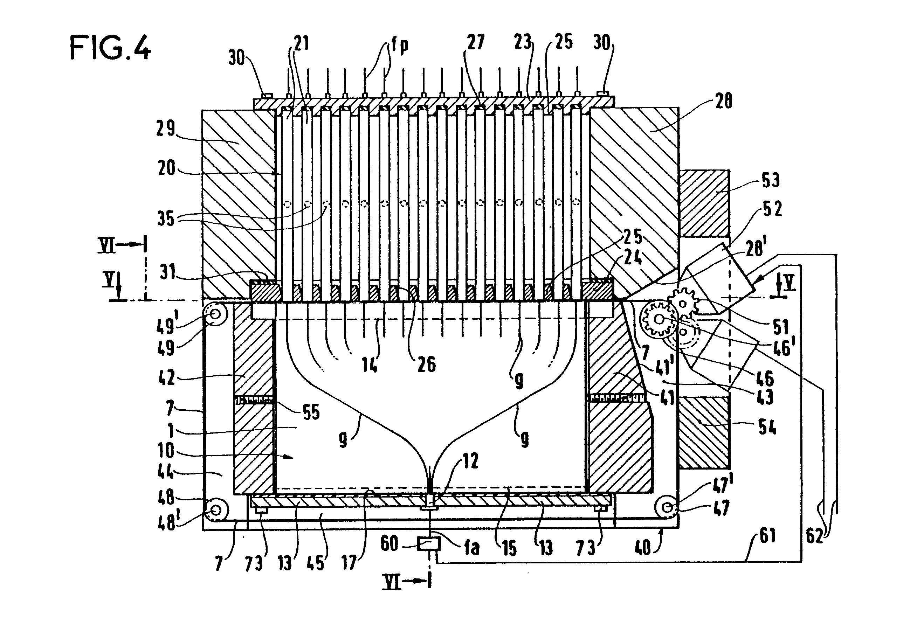

Dans les figures 4, 5 et 6, on a représenté un mode de réalisation concrète du diffuseur optique schématisé dans la figure 3 et on y a repéré les éléments identiques par les références précédentes.

L'empilement des 16 plaquettes de distribution de programme 21, formant l'ensemble de distribution optique 20, est effectué entre deux plaques ou grilles 23 et 24 de positionnement des plaquettes 21. Ces grilles 23 et 24 présentent des nervures, 25 pour la grille 23 et 26 pour la grille 24, au regard les unes des autres et entre lesquelles viennent se loger les bords opposés des différentes plaquettes 21, sur lesquels débouchent les accès de leurs guides internes, non visibles dans ces représentations.

Les nervures 25 entre lesquelles sont reçus les bords des plaquettes 21 qui portent les accès de leurs guides à coupler aux accès des fibres de programme fp, sont de section rectangulaire. La grille 23 présente une ou des fenêtres individuelles, non visibles, dans lesquelles débouchent ces accès des guides à coupler aux fibres de programme fp. Elle porte également des languettes élastiques 27 qui tapissent le fond des rainures délimitées par les nervures 25, pour un positionnement sans jeu des plaquettes de distribution 21 individuelles dans le diffuseur optique final.

Les nervures 26, entre lesquelles est reçu le bord des plaquettes de distribution 21 qui porte les autres accès de leurs guides internes, à coupler aux secondes extrémités des guides g de l'un des dispositifs opto-mécaniques, ont chacune un côté biseauté pour permettre un positionnement précis de ce bord de chacune des plaquettes 21 et un positionnement précis de ces accès d'une plaquette à l'autre dans l'empilement constitué. Les rainures délimités entre ces nervures 26 sont ouvertes sur la longueur des plaquettes 21. Cet empilement de plaquettes 21 sur les deux grilles 23 et 24 est maintenu par deux flasques latéraux 28, 29, au moyen de vis telles que 30, les bords de la grille 24 étant engagés et montés dans des décrochements internes convenables, formés en étant en regard dans les flasques 28 et 29, avec interposition d'un palier 31 en caoutchouc entre le fond de chaque décrochement et le bord correspondant de la grille. Du côté de cette grille 24, l'arête extérieure du flasque 28 est sectionnée pour définir un pan incline 28' sur ce flasque.

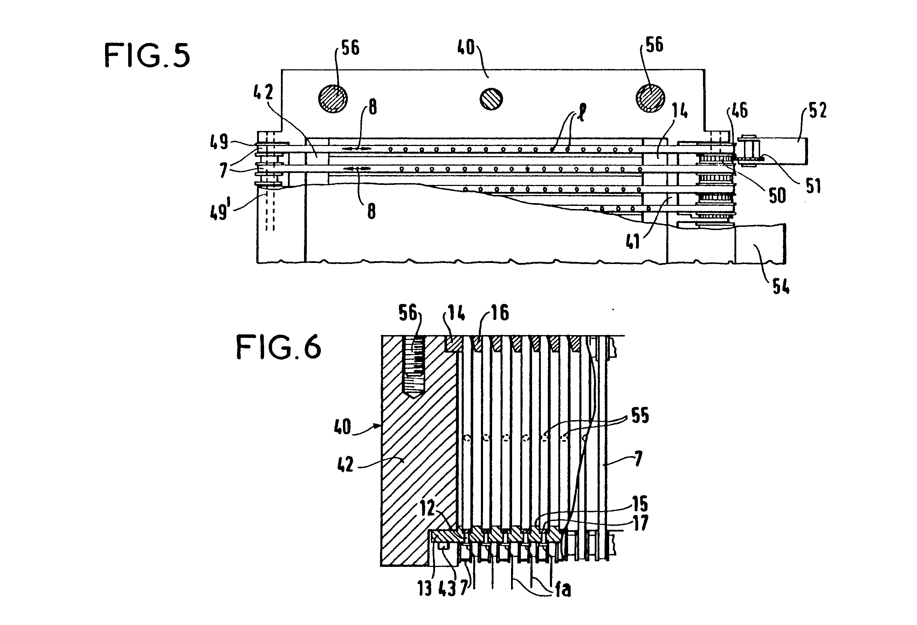

L'ensemble de sélection optique 10 est formé à partir de l'empilement des 32 plaquettes optiques 1 effectué entre deux plaques ou grilles de positionnement 13 et 14, de manière analogue à l'empilement des plaquettes 21, ainsi que visible dans la figure 4 et plus particulièrement dans la figure 6. La grille 14 porte des nervures 16 qui délimitent entre elles des rainures, ouvertessur la longueur des plaquettes 1, recevant le bord des plaquettes optiques 1 qui porte les secondes extrémités de ses guides g à positionner en regard des différents accès de sortie des programmes de l'une des 32 rangées sur l'ensemble de distribution 20. Ces nervures 16 ont également un bord biseauté pour une bonne tenue et un bon positionnement des plaquettes 1. Dans le diffuseur final résultant la grille 14 et la grille 24 seront positionnées face à face, avec entre elles un faible intervalle pour le passage des rubans 7.

La grille 13 porte, comme la grille 23 des nervures 15 de section rectangulaire. Ces nervures 16 délimitent entre elles des rainures dont le fond est tapissé de languettes 17, en caoutchouc, recevant le bord des plaquettes optiques 1, qui porte les premières extrémités à coupler en commun à l'une des fibres optiques fa. Cette grille 13 porte également, à l'opposé de ses nervures 15, des porte-fibres 12 agencés en une ligne et au pas des plaquettes 1 sur la grille 13 et recevant les différentes fibres fa dont les accès sont ainsi disposés en regard et à distance extrémement faible des premières extrémités communes de couplage des guides des différents plaquettes optiques 1.

Cet empilement de plaquettes optiques 1, auquel sont associées les fibres d'abonnés fa sur la grille 13, est maintenu par deux flasques latéraux 41 et 42 au moyen de vis telles que les vis 73.

En regard des figures 4 à 6, on voit que ces flasques 41 et 42 appartiennent à un cadre 40 de section générale rectangulaire sur lequel ils constituent deux des côtés opposés de la section en définissant extérieurement deux décrochements 43 et 44. Ces deux décrochements 43 et 44 constituent des logements pour les moyens de guidage et d'entraînement des rubans 7, qui seront indiqués ci-après, et sont réunis par un autre décrochement 45, formé sur l'une des deux autres faces du cadre. Ce décrochement 45 sert également de logement aux rubans 7 mais également à la grille 13 précitée dont les nervures sont engagées à l'intérieur du cadre à travers une fenêtre, non référencée, pratiquée dans le fond de ce décrochement 45.

Les moyens de positionnement, de guidage et d'entraînement des rubans 7 devant leur plaquette optique 1, sont constitués, pour chaque plaquette optique, par un jeu de quatre poulies 46 à 49, dont l'une d'elle 46 est solidaire d'un pignon d'entraînement 50. Ce pignon d'entraînement 50 est, par ailleurs, couplé à un pignon moteur 51 monté sur l'arbre d'un moteur 52.

Les jeux de poulies pour les différents plaquettes optiques 1 sont positionnés dans les décrochements 43, 44 et 45, sensiblement au niveau des arêtes du cadre 40, le long de chacune desquelles elles sont montées folles sur un arbre 46', 47', 48' ou 49' selon les poulies concernées. Les pignons d'entraînement 50 des différentes plaquettes optiques 1, associés chacun à l'une des poulies 46, sont également montés fous sur l'arbre 46' sur lequel ces pignons et les poulies 46 se présentent alternés. Chaque ruban 7 forme alors une boucle sans fin tendue sur son jeu de poulies 46 à 49. Pour faciliter le couplage entre chacune des fibres fa et les guides de la plaquette optique 1 convenable, le ruban 7 monté tout autour de cette plaquette optique est légèrement décalé d'un côté de la plaquette optique tandis que la fibre fa est légèrement déviée pour son passage dans l'intervalle entre ce ruban et le ruban adjacent (figure 6).

Pour des raisons d'encombrement moindre, les pignons moteurs 51 et les moteurs 52, affectés aux plaquettes optiques 1 successives dans l'empilement, sont alternativement agencés selon deux directions décalées angulairement, pour lesquelles ont été prévus le pan incliné 28' du flasque 28 et un pan incliné 41' sur le flasque 41 à leur niveau. Deux plateaux latéraux 53 et 54, fixés sur les flasques, supportent les deux rangées de moteurs.

L'ensemble de distribution 20 et l'ensemble de sélection optique 10 auquel sont solidarisés les porte-fibres 12 des fibres d'abonnés fa, sont assemblés orthogonalement l'un à l'autre et maintenus par des jeux de vis telles que 56 liant les flasques 28 et 29 et le cadre 40. Le diffuseur optique résultant est en outre équipé de plaques frontales d'habillage, non illustrées. Des vis individuelles telles que 35 pour les plaquettes de distribution 31 et des vis individuelles 55 pour les plaquettes optiques 1 permettent un réglage final de chacun de ces éléments de long de leurs nervures de positionnement et donc de chacun de ces éléments relativement aux autres, pour un positionnement final précis des accès des plaquettes optique 1 en regard des accès que leur correspondent sur les différentes plaquettes 21.

Dans la figure 4, pour une description complète du diffuseur optique, on a en outre illustré en 60 un coupleur optique monté sur la fibre d'abonnée fa illustrée. Ce coupleur optique 60, de type en tant que tel connu, assure la continuité de la transmission vers l'abonné du programme sélectionné mais assure également la transmission vers le moteur correspondant de la commande de sélection de programme issue de l'abonné. Il comportera, par exemple, un miroir semi-transparent monté entre une lentille de focalisation et une lentille de collimation. Cette commande de sélection de programme issue de l'abonné est transmise depuis le coupleur 60 sur un liaison 61 et après détection dans un circuit de commande du moteur 52 correspondant, non illustré, est appliquée à ce moteur 52 correspondant. On a également schématisé par des liaisons 62, les fils d'alimentation individuelle des différents moteurs.

On notera que, pour éviter tout risque de positionnement incorrect des rubans en réponse aux commandes de sélection de programme issues des différents abonnés, on pourra prévoir des moyens (non représentés) de repérage de la position de chacun des rubans fournissant, pour chaque ruban, un code binaire représentatif de la position du ruban permettant, par comparaison avec la commande de sélection de programme issue de l'abonné correspondant, de commander l'entraînement du ruban jusqu'à ce qu'il occupe la position qui assure la sélection du programme souhaité par l'abonné.

De tels moyens de repérage pourront comporter, par exemple, des plaquettes, au nombre de 5 pour $2^4 \leq P = 16 < 2^5$, identiques aux plaquettes de distribution 21 et incorporées à celles-ci dans l'ensemble de distribution 20, ces plaquettes additionnelles étant alimentées par un signal lumineux continu, des perforations additionnelles dans chaque ruban 7, ici au nombre de 33 pour chaque ruban, et des guides d'ondes additionnels dans chaque plaquette optique 1, en nombre égal à celui des plaquettes additionnelles.

Les 5 plaquettes additionnelles de l'ensemble de distribution seront ajoutées à une extrémité de l'empilement des 16 plaquettes de distribution 21 et auront chacune les premiers accès de leurs 32 guides d'onde couplés en commun à l'accès d'un élément optique, fibre ou source, pour recevoir de celui-ci un signal lumineux continu tandis que les seconds accès de leurs 32 guides, ou accès de sortie additionnels, définiront 32 rangées de 5 accès disposés au pas régulier r.

Les 5 guides d'onde additionnels de chaque plaquette optique seront disposés à une extrémité de cette plaquette prévue de longueur suffisante pour l'incorporation de ces 5 guides d'ondes additionnels dont des extrémités seront disposées en regard respectivement des 5 accès de sortie additionnels de l'une de ces 32 rangées et dont les autres extrémités, débouchant par exemple sur le bord de la plaquette qui fait face à la fibre d'abonné correspondante, seront couplées à des photodiodes reliées au circuit de commande du moteur d'entraînement du ruban associé à la plaquette optique considérée.

Les 33 perforations additionnelles de chaque ruban seront disposées de manière à permettre de recueillir, pour chacune des 16 positions différentes du ruban pour lesquelles s'effectue un couplage entre l'accès de la fibre d'abonné concernée et l'accès de l'une des fibres de programme, un code différent, à 5 bits, en sortie des guides d'onde additionnels de la plaquette optique associé au ruban.

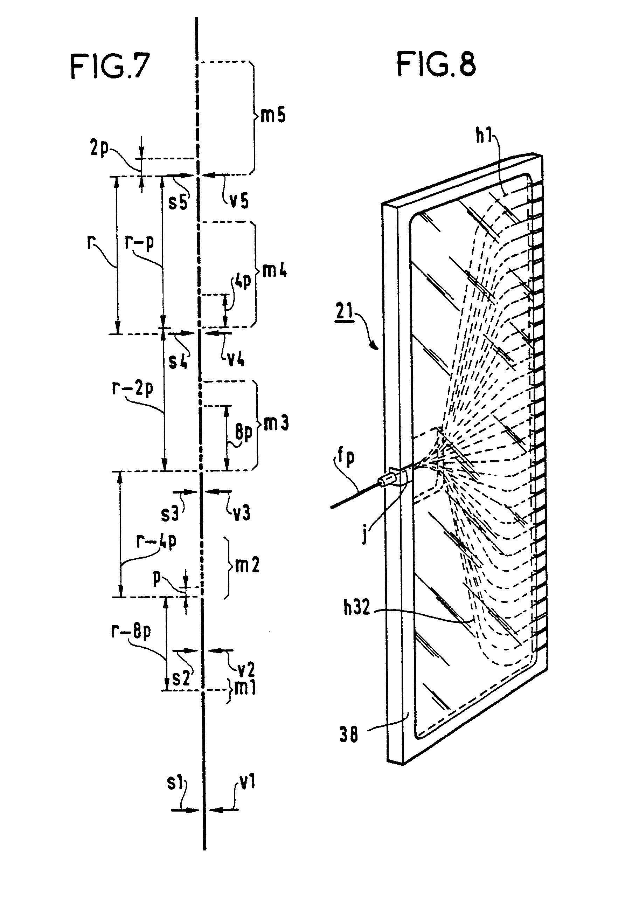

Dans la figure 7 on a schématisé un agencement de ces perforations additionnelles formées dans le ruban 7, relativement aux accès de sortie additionnels repérés par s1 à s5 et aux guides d'onde additionnels repérés par v1 à v5. Ces perforations forment cinq groupes successifs M1 à M5 comportant, en ce qui concerne un premier groupe M1, une perforation unique et, en ce que concerne les quatre suivants M2 à M5, 8 perforations chacun, les perforations d'un même groupe étant destinées à être en regard d'une même accès de sortie additionnel pour différentes positions du ruban parmi les 16 positions de couplage de celui-ci, les 5 groupes de perforations correspondant donc aux 5 accès de sortie additionnels respectivement. Dans le deuxième groupe de perforation M2, c'est-à-dire celui suivant immédiatement le premier groupe M1, les perforations seront disposées au pas p d'entraînement du ruban, la première perforation de ce deuxième groupe étant distante de (r—8p) de la perforation unique du premier. Dans le troisième groupe de perforations M3, celles-ci formeront 2 paquets de 4 perforations disposées au pas p, les premières perforations des deux paquets étant distantes l'une de l'autre de 8p et la première perforation de ce troisième groupe étant distante de (r—4p) de la première perforation du deuxième groupe. Dans le quatrième groupe M4 de perforations, celles-ci formeront 4 paquets de 2 perforations distantes de p, les premières perforations de deux paquets successifs étant distantes l'une de l'autre de 4p et la première perforation de ce quatrième groupe étant distante de (r—2p) de la première perforation du troisième groupe. Dans le cinquième groupe de perforation M5, celles-ci seront disposées régulièrement au double du pas p, la première perforation de ce cinquième groupe étant distante de (r—p) de la première perforation du quatrième groupe.

Dans la figure 8, on a illustré un exemple de réalisation d'une plaquette 21 de distribution de l'un des programmes rentrant dans les réalisations selon les figures 3 à 6.

Cette plaquette 21 incorpore les 32 guides individuels h1 à h32 indiqués dans la figure 3, ayant sur un bord de la plaquette des extrémités couplées en commun à la fibre de programme fp à laquelle la plaquette est affectée et ayant sur le bord opposé les autres extrémités s'étendant au pas entre plaquettes optiques 1 dans le diffuseur. Le couplage commun des extrémités des guides h1 à h32 sur l'accès de la fibre de programme fp est assuré par un guide auxiliaire commun j, de faible longueur mais de section plus importante que les guides individuels h1 à h32.

Cette plaquette de distribution comporte, en outre, une armature périphérique 38, par exemple en alliage à base d'aluminium.

Cette plaquette de distribution pourra être réalisée, comme la plaquette optique 1 en structure intégrée, l'armature périphérique étant alors rapportée et collée sur la plaque de verre dans laquelle sont crées les guides h et leur troncon de couplage commun j. Cette plaquette 31 pourra aussi être obtenue, comme les plaquettes optiques 1 par moulage ou surmoulage de fibres individuelles h et j. Les extrémités de ces fibres h et j, côté armature, seront initialement prépositionnées et collées sur cette armature jouant le rôle de cadre de positionnement initial. Les extrémités de ces fibres h, au niveau de leur couplage à l'extrémité de la fibre j, seront rassemblées, ainsi qu'il est connu, en un réseau hexagonal compact, à plusieurs couches, positionné en regard de la fibre j. Les bords de la plaquette résultante, portant les extrémités des fibres, seront ultérieurement rectifiés et polis.

## Revendications

1. Ensemble de commutation optique spatiale entre accès d'un premier groupe (GA) de N premiers éléments optiques distincts (fa) et un second groupe (GP) de P seconds éléments optiques distincts (fp), caractérisé par le fait qu'il comporte:

—un ensemble dit de sélection optique (10) constitué par un empilement de N plaquettes optiques (1) rigides et plates interposées et maintenues fixes chacune en regard de l'accès de l'un des N premiers éléments optiques (fa) qui sont montés, au pas des plaquettes optiques (1) dans leur empilement, en un réseau qui leur est transversal, dans lequel ensemble (10) chaque plaquette optique (1) comporte P guides d'ondes distincts (g) ayant des premières extrémités couplées en commun à l'accès du premier élément optique (fa) en regard, auquel cette plaquette optique est affectée, et des secondes extrémités alignées débouchant sur l'un des bords, et chaque plaquette optique est associée à un ruban (5, 7) étanche à la lumière, présentant au moins une perforation (1) et mobile en translation devant les secondes extrémités des P guides de cet plaquette optique, et dans lequel ensemble lesdites plaquettes optiques (1) ont toutes les secondes extrémités de leurs guides avec leurs N rubans associés d'un même côté de l'ensemble de sélection optique (10),

—un ensemble dit de distribution optique (20) constitué par un empilement de P plaquettes (21) dites de distribution optique, dans lequel les plaquettes (21) sont montées transversalement aux plaquettes optiques (1) de l'ensemble de sélection optique (10) et au même pas que celui entre les secondes extrémités des guides de chacune des plaquette optiques (1) de l'ensemble de sélection optique (10) et incorporent chacune N guides d'onde individuels (h) ayant des premières extrémités couplée en commun à l'accès dudit second élément optique (fp) auquel la plaquette considérée (2) est affectée, et des secondes extrémités alignées qui débouchent sur l'un des bords de la plaquette, et dans lequel les premières extrémités des guides (h) des différentes plaquettes (21) sont d'un même côté de l'empilement et sont copulées aux accès des seconds éléments optiques (fp) et les secondes extrémités des guides guides des différentes plaquettes (21) débouchent d'un même autre côté de l'empilement en étant agencées en N rangées perpendiculaires aux plans des plaquettes (21) de l'ensemble de distribution sur chacune desquelles elles sont en regard respectivement des secondes extrémités des P guides de l'une desdites plaquettes de l'ensemble de selection (10) et séparés de cette plaquette par le ruban (5, 7) qui lui est associé.

2. Ensemble de commutation optique spatiale selon la revendication 1 caractérisé par le fait qu'il comporte:

—des premiers moyens mécaniques de maintien et de positionnement desdites plaquettes (21) dans leur empilement, comportant une paire de grilles (23, 24) à nervures (25, 26) en vis-à-vis, entre lesquelles sont montées les plaquettes (21), et des flasques latéraux (28, 29) sur lesquels sont montés ledites grilles 23, 24

—des seconds moyens mécaniques de maintien et de positionnement desdits plaquettes optiques (1) dans leur empilement, comportant deux grilles (13, 14) à nervures (15, 16) en vis-à-vis entre lesquelles sont montés lesdites plaquettes optiques (1) et des flasques latéraux (41, 42) sur lesquels sont montés lesdites grilles,

—des troisièmes moyens mécaniques de maintien relatif des accès desdits premiers éléments optiques (fa) et de l'empilement des plaquettes optiques (1), constitués par l'une des grilles (13) portant lesdites plaquettes optiques dans laquelle sont montés et engagés des supports individuels (12) pour lesdits premiers éléments,

—des quatrièmes moyens mécaniques de positionnement et de maintien desdits rubans (5, 7) relativement à l'empilement desdites plaquettes optiques, comportant pour chaque plaquette optique un jeu de poulies périphériques (46—49) et des moyens d'entraînement individuels (51—52) de ce ruban portés par lesdits flasques (41, 42) desdits seconds moyens mécaniques.

3. Ensemble de commutation optique spatiale selon la revendication 2, caractérisé en ce que lesdits flasques (41, 42) desdits seconds moyens mécaniques comportent des décrochements (43, 44) pour les jeux de poulies (46—49) et les moyens d'entraînement individuels des rubans.

4. Ensemble de commutation optique spatiale selon l'une des revendications 1 à 3, caractérisé par le fait que ledit ruban (7) comporte P perforations (1) alignées et ayant un espacement entre deux consécutives d'entre elles égal, à un incrément p près, au pas entre les secondes extrémités consécutives des P guides de chaque plaquette optique, ledit incrément p, faible par rapport à ce pas étant le pas de défilement dudit ruban (7).

5. Ensemble de commutation optique selon l'une des revendications 1 à 4, caractérisé par le fait que chacune des plaquettes de distribution (21) comporte une armature périphérique (38).

6. Ensemble de commutation optique spatiale selon l'une des revendications 1 à 5, caractérisé par le fait qui chacune des plaquettes de distribution (21) comporte, en outre, un guide d'onde supplémentaire (j) dit guide de couplage commun, assurant le couplage entre l'accès du second élément optique (fp) affecté à la plaquette considérée et les N guides d'onde (h) de cette plaquette (21).

7. Ensemble de commutation optique spatiale selon l'une des revendications 5 et 6, caractérisé par le fait que chaque plaquette (21) est en une résine époxy chargée en silice dans laquelle sont noyés les guides (j, h) qu'elle comporte.

8. Ensemble de commutation optique spatiale selon l'une des revendications 5 et 6, caractérisé par le fait que chaque plaquette (21) est un verre dans lequel sont noyés les guides (h, j) qu'elle comporte.

9. Ensemble de commutation optique spatiale selon l'une des revendications 1 à 5, caractérisé par le fait que chaque plaquette de distribution (21) est formée par une plaque de verre dans laquelle sont créés par diffusion d'ions les guides qu'elle comporte.

**Patentansprüche**

1. Vorrichtung zum optischen räumlichen Durchschalten zwischen Anschlüssen einer ersten Gruppe (GA) von N ersten diskreten optischen Elementen (fa) und einer zweiten Gruppe (GP) von P zweiten diskreten optischen Elementen (fp), dadurch gekennzeichnet, daß sie aufweist:

— eine optische Auswahleinheit (10), bestehend aus einem Stapel von N starren und flachen optischen Platten (1), die je gegenüber dem Anschluß eines der N ersten optischen Elemente (fa), die im Abstand der optischen Platten (1) in ihrem Stapel montiert sind, in einem zu ihnen transversal liegenden Netz angeordnet und gehalten werden, wobei jede optische Platte (1) der Einheit (10) P diskrete Lichtleiter (g) aufweist, deren erste Enden gemeinsam an den gegenüberliegenden Anschluß des ersten optischen Elements (fa) gekoppelt sind, dem diese optische Platte zugeordnet ist, und deren zweite Enden in Flucht liegen und an einem der Ränder münden, wobei jede optische Platte einem lichtundurchlässigen Band (5, 7) zugeordnet ist, das mindestens eine Perforation (1) besitzt und das in Translationsrichtung vor den zweiten Enden der P Lichtleiter dieser optische Platte verschiebbar ist, und wobei die optischen Platten (1) alle mit den zweiten Enden ihrer Lichtleiter und ihren N zugeordneten Bändern auf derselben Seite der optischen Selektionseinheit (10) liegen,

— und eine optische Verteileinheit (20), die von einem Stapel von P optischen Verteilplatten (21) gebildet wird, wobei diese Platten (21) quer zu den optischen Platten (1) der optischen Auswahleinheit (10) angeordnet sind, und zwar im selben Abstand wie der zwischen den zweiten Enden der Lichtleiter jeder der optischen Platten (1) der optischen Auswahleinheit (10), wobei diese Platten (21) je N individuelle Lichtleiter (h) enthalten, deren erste Enden gemeinsam an den Anschluß des zweiten optischen Elements (fp), dem die betrachtete Platte (21) zugeordnet ist, gekoppelt sind, während die zweiten in Flucht liegenden Enden an einem der Ränder der Platte münden, und wobei die ersten Enden der Lichtleiter (h) der verschiedenen Platten (21) auf derselben Seite des Stapels liegen und an die Anschlüsse der zweiten optischen Elemente (fp) gekoppelt sind, während die zweiten Enden der Lichtleiter der verschiedenen Platten (21) auf einer anderen gemeinsamen Seite des Stapels münden und in N Reihen senkrecht zu den Ebenen der Platten (21) der Verteileinheit angeordnet sind, wobei diese Enden in jeder der Reihen jeweils gegenüber den zweiten Enden der P Lichtleiter einer der Platten der Auswahleinheit (10) liegen und von dieser Platte durch das zugeordnete Band (5, 7) diskret sind.

2. Räumliche optische Schaltvorrichtung nach Anspruch 1, dadurch gekennzeichnet, daß sie aufweist:

— erste mechanische Mittel zum Halten und Positionieren der Platten (21) in ihrem Stapel, mit einem Paar von Gittern (23, 24), die einander gegenüberliegend Rippen (25, 26) aufweisen, zwischen denen die Platten (21) montiert sind, und mit seitlichen Wangen (28, 29), auf denen die Gitter (23, 24) montiert sind,

— zweite mechanische Mittel zum Halten und Positionieren der optischen Platten (1) in ihrem Stapel, mit zwei Gittern (13, 14), die einander gegenüberliegend Rippen (15, 16) besitzen, zwischen denen die optischen Platten (1) montiert sind, und mit seitlichen Wangen (41, 42), auf denen die Gitter montiert sind,

— dritte mechanische Mittel zum Halten der Anschlüsse der ersten optischen Elemente (fa) bezüglich des Stapels von optischen Platten (1), bestehend aus einem der Gitter (13), das die optischen Platten trägt und in dem die individuellen Halter (12) für die ersten Elemente montiert und eingelassen sind,

— und vierte mechanische Mittel zur Positionierung und zum Halten der Bänder (5, 7) bezüglich des Stapels der optischen Platten, wobei diese Mittel für jede optische Platte einen Satz von peripheren Unlenkrollen (46—49) und von individuellen Antriebsmitteln (51—52) für dieses Band enthalten, die von den Wangen (41, 42) der zweiten mechanischen Mittel getragen werden.

3. Rämliche optische Schaltvorrichtung nach Anspruch 2, dadurch gekennzeichnet, daß die Wangen (41, 42) der zweiten mechanischen Mittel Aussparungen (43, 44) für die Umlenkrollensätze (46—49) und die individuellen Antriebsmittel der Bänder aufweisen.

4. Rämliche optische Schaltvorrichtung nach einem der Ansprüche 1 bis 3, dadurch gekennzeichnet, daß das Band (7) P Perforationen (1) in Flucht hintereinander und mit einem Abstand zwischen zwei aufeinanderfolgenden Perforationen aufweist, der bis auf ein Inkrement t dem Abstand zwischen den aufeinanderfolgenden zweiten Enden der P Lichtleiter jeder optischen Platte gleicht, wobei das Inkrement p, das bezüglich dieses Abstands klein ist, dem Schritthub des Bandes (7) entspricht.

5. Optische Schaltvorrichtung nach einem der Ansprüche 1 bis 4, dadurch gekennzeichnet, daß jede der Verteilplatten (21) eine periphere Armatur (38) besitzt.

6. Rämliche optische Schaltvorrichtung nach einem der Ansprüche 1 bis 5, dadurch gekennzeichnet, daß jede der Verteilplatten (21) außerdem einen zusätzlichen Lichtleiter (j), gemeinsamer Kopplungslichtleiter genannt, aufweist, der die Kopplung zwischen dem Anschluß des zweiten optischen Elements (fp), das der betrachteten Platte zugeordnet ist, und den N Lichtleitern (h) dieser Platte (21) sichert.

7. Rämliche optische Schaltvorrichtung nach einem der Ansprüche 5 und 6, dadurch gekennzeichnet, daß jede Platte (21) aus einem mit Siliciumoxid versehenen Epoxyharz besteht, in das die Lichtleiter (j, h) eingebettet sind.

8. Rämliche optische Schaltvorrichtung nach einem der Ansprüche 5 und 6, dadurch gekennzeichnet, daß jede Platte (21) aus einem Glas besteht, in das die Lichtleiter (h, j) eingebettet sind.

9. Rämliche optische Schaltvorrichtung nach einem der Ansprüche 1 bis 5, dadurch gekennzeichnet, daß jede Verteilplatte (21) aus einer Glasplatte besteht, in der die Lichtleiter durch Ionendiffusion erzeugt sind.

## Claims

1. A device for an optical spatial switching being accesses of a first group (GA) of N first distinct optical elements (fa) and a second group (GP) of P second distinct optical elements (fp), characterized in that it comprises:

—an optical selection assembly (10) constituted by a stack of N rigid, flat optical plates (1) interposed and each maintained in a fixed position face to the access of one of the N first optical elements (fa) which are mounted according to the pitch of the optical plates (1) in their stack in a network which is transverse to these plates, each optical plate (1) in the assembly (10) comprising P distinct waveguides (g), first ends of which are coupled in common to the access of the first optical element which faces it and to which this optical plate is associated, second aligned ends of the P distinct waveguides (g) emerging on one of the edges, each optical plate being associated to an opaque tape (5, 7) presenting at least one perforation (I) and being movable in front of the second ends of the P waveguides of this optical plate, and all the optical plates (1) in this assembly having the second ends of their waveguides with their N tapes associated to the same side of the optical selection assembly (10),

—an optical distribution assembly (20) constituted by a stack of P optical distribution plates (21) in which the plates (21) are mounted transversely to the optical plates (1) of the optical selection assembly (10) and at the same pitch as that between the second ends of the waveguides of each of the optical plates (1) of the optical selection assembly (10), and each one incorporating N individual waveguides (h) having their first ends coupled in common to the access of said second optical element (fp) to which the respective plate (21) is associated, whereas second aligned ends emerge on one of the edges of the plate, the first ends of the guides (h) of the different plates (21) being disposed at the same side of the stack and being coupled to the accesses of the second optical elements (fp), the second ends of the waveguides of the different plates (21) emerging at a common side of the stack and being arranged in N rows perpendicularly to the planes of the plates (21) of the distribution assembly, these second ends facing on each row second ends of the P waveguides respectively of one of said plates of the selection assembly (10) and being separated from said plate by the associated tape (5, 7).

2. A spatial optical switch assembly according to claim 1, characterized in that it comprises:

—first mechanical means for holding and positioning said plates (21) in their stack, comprising a pair of grids (23, 24) with ribs (25, 26) in face to face relationship, between which the plates (21) are mounted, and comprising lateral blocks (28, 29) on which these grids (23, 24) are mounted,

—second mechanical means for holding and positioning said optical plates (1) in their stack, comprising two grids (13, 14) with ribs (15, 16) in face to face relationship between which said optical plates (1) are mounted, and comprising lateral blocks (41, 42) on which said grids are mounted,

—third mechanical means for holding the accesses of said first optical elements (fa) relative to the stack of optical plates (1), these means being constituted by one of the grids (13) bearing said optical plates, in which grid individual supports (12) for these first elements are mounted and engaged,

—fourth mechanical means for positioning and holding said tapes (5, 7) in relation to the stack of said optical plate, comprising for each optical plate a set of peripheral rollers (46—49) and individual driving means (51, 52) for that tape, supported by said blocks (41, 42) of said second mechanical means.

3. A spatial optical commutation assembly according to claim 2, characterized in that said blocks (41, 42) of said second mechanical means comprise housings (43, 44) for the set of rollers (46—49) and the individual tape driving means.

4. A spatial optical switch assembly according to one of claims 1 to 3, characterized in that said tape (7) comprises P perforations (1) which are aligned and have an interspacing between two successive perforations which is equal, plus or minus an increment p, to the pitch between the second successive ends of the P guides of each optical plate, said increment p, which is small with respect to this pitch, being the step size of displacement of the tape (7).

5. An optical switch assembly according to one of claims 1 to 4, characterized in that each one of the distribution plates (21) comprises a frame (38).

6. A spatial optical switch assembly according to one of claims 1 to 5, characterized in that each one of the distribution plates (21) further comprises an additional waveguide (j) called common coupling waveguide, which ensures the coupling between the access of the second optical element (fp) associated to the respective plates, and the N waveguides (h) of said plate (21).

7. A spatial optical switch assembly according to one of claims 5 to 6, characterized in that each plate (21) is made of a silica charged epoxy resin in which the waveguides (j, h) are embedded.

8. A spatial optical switch assembly according to one of claims 5 to 6, characterized in that each plate (21) is made of glass in which the guides (h, j) are embedded.

9. A spatial optical switch assembly according to one of claims 1 to 5, characterized in that each distribution plate (21) is made of a glass plate in which the waveguides are created by ion diffusion.

FIG.1

FIG.2

# FIG.3

FIG.4

FIG.5

FIG.6

0 131 131

0 131 131

# FIG.7

m5

2p
s5    v5

r    r-p
      4p   m4

s4    v4

r-2p
      8p   m3

s3    v3

r-4p
      p    m2

r-8p

s2    v2
      m1

s1    v1

# FIG.8

h1

21

fp

j

h32

38